# FASCICULE DE BREVET EUROPEEN

(11) **EP 2 321 225 B1**
(45) Date de publication et mention de la délivrance du brevet: **06.06.2012**
(21) Numéro de dépôt: 09806505.5
(22) Date de dépôt: 04.08.2009
(51) Int. Cl.: C01F 11/18, C09C 1/02, D21H 17/67

(54) **UTILISATION D'UN POLYMÈRE ACRYLIQUE FAIBLEMENT IONIQUE DANS LA SYNTHÈSE DE CARBONATE DE CALCIUM PRÉCIPITÉ**
VERWENDUNG EINES SCHWACH IONISCHEN ACRYLPOLYMERS BEI DER SYNTHESE VON PRÄZIPITIERTEM CALCIUMCARBONAT
USE OF A WEAKLY IONIC ACRYLIC POLYMER IN THE SYNTHESIS OF PRECIPITATED CALCIUM CARBONATE

(30) Priorité: 13.08.2008 FR 0804589
(43) Date de publication de la demande: 18.05.2011
(73) Titulaire: COATEX S.A.S., 69730 Genay (FR)
(72) Inventeur: GUILLOT, Murielle, 69300 Caluire et Cuire (FR); KENSICHER, Yves, F-69620 Theize (FR)
(74) Mandataire: Tetaz, Franck Claude Edouard
(86) Numéro de dépôt international: PCT/IB2009/006530
(87) Numéro de publication internationale: WO 2010/018448

(56) Documents cités:
- EP-A- 1 151 966
- WO-A-2005/000742
- WO-A-2008/047220
- FR-A- 2 900 411
- FR-A- 2 911 147

## Description

Le carbonate de calcium synthétique ou précipité (PCC) est une matière minérale de synthèse utilisé notamment dans le papier, et plus particulièrement dans la charge de masse ou comme pigment de couchage. A l'échelle industrielle, il est obtenu à partir de la chaux vive (CaO) qui est hydratée pour former une suspension aqueuse d'hydroxyde de calcium (Ca(OH)₂). Cette réaction, dite d'extinction de la chaux vive est suivie d'une étape de carbonatation au cours de laquelle on fait réagir l'hydroxyde de calcium avec du dioxyde de carbone, introduit par bullage dans le milieu réactionnel : on forme alors du carbonate de calcium précipité.

Il existe aujourd'hui de très nombreux brevets décrivant des variantes et des caractéristiques particulières du procédé décrit ci-dessus. On comprend aisément que la cinétique de la réaction de synthèse du PCC, lors de la mise en contact de l'hydroxyde de calcium avec le dioxyde de carbone, joue un rôle déterminant sur la capacité de production d'une usine de PCC : plus cette réaction est rapide, meilleur sera le rendement de l'unité de fabrication concernée. L'homme du métier parle de temps de carbonatation, ou du temps nécessaire pour transformer complètement la chaux éteinte en carbonate de calcium. Réduire ce temps représente donc un enjeu économique important.

De nombreuses études ont abordé ce problème d'un point de vue procédé. A titre d'exemple, le document WO 01 07365 propose une méthode de fabrication de PCC avec un temps de carbonatation réduit, au moyen d'une pression inférieure à la pression atmosphérique au sein du réacteur où a lieu la réaction de carbonatation. Toutefois, ce type de solution implique des modifications en général coûteuses des différents équipements de production.

L'homme du métier s'est aussi tourné vers des solutions chimiques, reposant sur la mise en oeuvre de différents additifs au sein du procédé de fabrication du PCC. Dans le document « Change of formation yield and characterization of PCC particle synthesized with impurity ions contents by carbonation process » (Materials Science Forum, 510-511, march 2006, pp. 1026-1029), il apparaît que l'addition de certains ions (de l'aluminium, du fer et du magnésium) permet d'accélérer la cinétique de la réaction de carbonatation. Ce document démontre aussi qu'on observe alors une modification de la structure cristallographique du PCC formé, par rapport au même procédé ne mettant pas en oeuvre de tels ions.

Dans le document « Morphological characteristics and aggregation of calcite crystals obtained by bubbling CO2 through Ca(OH)2 suspension in the presence of additives » (Powder Technology, 130, 2003, pp. 307-315), il apparaît que l'addition d'acide citrique, de sucrose ou de dodécyl sulfate de sodium augmente largement le temps de carbonatation. Par contre, la mise en oeuvre d'un polyéthylène glycol (de poids moléculaire égal à 300 g/mol) permet de réduire ce temps ; mais dans ce cas, la surface spécifique du PCC synthétisé est pratiquement doublée.

En ce qui concerne la mise en oeuvre de polyacrylates (espèces chimiques bien connues comme étant des dispersants du PCC), leur fonction diffère selon le procédé envisagé. Le document « Precipitation of calcium carbonate in aqueous systems » (Tenside Surfactants Detergents, volume 36, 1999, pp. 162-167) révèle que l'acide polyacrylique conduit nécessairement à la formation de vatérite, partant d'une solution supersaturée en carbonate de calcium. Il n'enseigne rien quant au temps de carbonatation. Le document « Effect of macromolecules on the crystallization of CaCO3 » (Supramolecular Science, volume 5, n° 3-4, 1988, pp. 3-4) démontre que ce même acide inhibe la formation de cristaux de PCC, dans le cas d'une solution supersaturée en bicarbonate de calcium.

Enfin, les documents WO 2005 / 000742 et WO 2004 / 106236 divulguent un procédé de fabrication de PCC dans lequel on introduit respectivement un polyacrylate et un polyphosphate au cours de la réaction de carbonatation, celle-ci n'étant pas achevée. Sans renseigner sur l'influence de ces ajouts sur le temps de carbonatation, ces documents démontrent clairement que la structure cristallographique du PCC ainsi formé n'est pas nécessairement conservée par rapport au PCC obtenu sans la mise en oeuvre de ces additifs.

Par conséquent, l'enjeu initial de diminuer le temps de carbonatation n'est significatif que s'il est directement relié aux exigences suivantes :
- identifier un additif chimique résolvant ce problème, ce qui dédouane l'homme du métier de modifications parfois complexes et souvent onéreuses sur son installation de production,
- l'ajout dudit additif ne devant pas avoir pour conséquence de modifier la structure cristallographique du PCC fabriqué, ni d'altérer ses caractéristiques granulométriques, étant entendu que l'homme du métier souhaite améliorer sa capacité de production tout en disposant au final d'un produit aux caractéristiques inchangées,
- l'ajout dudit additif devant conduire à une suspension aqueuse ayant une teneur en poids sec de PCC maximale, cette exigence étant reliée à l'intérêt économique de fabriquer une suspension avec une concentration de matière active la plus élevée possible.

En vue de résoudre ce problème technique complexe, la Demanderesse a mis au point l'utilisation, dans un procédé de fabrication de carbonate de calcium précipité (PCC), comme agent diminuant le temps de carbonatation dudit carbonate, d'au moins un copolymère caractérisé en ce qu'il est constitué, exprimé en pourcentage en mole de chacun de ses monomères :
a) de 10 % à 99 %, préférentiellement de 50 % à 98 %, très préférentiellement de 80 % à 97 %, et de manière extrêmement préférentielle de 85 % à 95 % d'au moins un monomère vinylique autre que le monomère de formule (I),
b) de 1 % à 90 %, préférentiellement de 2 % à 50 %, très préférentiellement de 3 % à 20 %, et de manière extrêmement préférentielle de 5 % à 15 % d'au moins un monomère non ionique, de formule (I) : 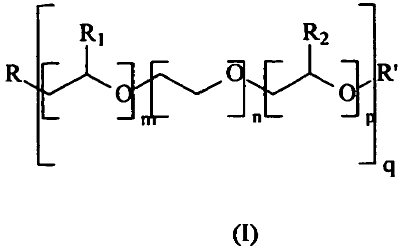 dans laquelle :
   - m, n, p et q sont des entiers et m, n, p sont inférieurs à 150 et l'un d'eux au moins est supérieur à 0, préférentiellement 20,
   - R comporte une fonction insaturée polymérisable,
   - R₁ et R₂ sont identiques ou différents et représentent des atomes d'hydrogène ou des groupements alkyls ayant de 1 à 4 atomes de carbone,
   - R' représente l'hydrogène ou un radical hydrocarboné ayant 1 à 40 atomes de carbone, préférentiellement 1 à 4 atomes de carbone, R' étant très préférentiellement le radical méthyle
ou du mélange de plusieurs monomères de formule (I),

la somme des pourcentages en môle des monomères a) et b) étant égale à 100 %.

De manière tout à fait surprenante et avantageuse, la mise en oeuvre d'un tel polymère, notamment avant et/ou pendant l'étape de mise en contact de la suspension aqueuse de chaux éteinte avec du dioxyde de carbone, permet de réduire le temps de carbonatation. De plus, cet objectif est atteint sans que soit pour autant modifiée la structure cristallographique du PCC : celle-ci est identique à celle obtenue sans mise en oeuvre dudit copolymère. En outre, les caractéristiques granulométriques (diamètre médian et surface spécifique) du PCC ne sont pas altérées. Enfin, on parvient à fabriquer une suspension aqueuse de PCC avec un extrait sec maximal et une viscosité tout à fait acceptable, sans avoir recours à une addition d'eau en vue de corriger une dérive viscosimétrique.

Sans vouloir être liée à une quelconque théorie, la Demanderesse est de l'avis que ces résultats, et avant tout la possibilité de réduire le temps de carbonatation, s'expliquent par la capacité dudit copolymère à disperser efficacement les particules de chaux éteinte dans l'eau, ce qui améliore leur réactivité avec le dioxyde de carbone. De plus, ce pouvoir dispersant s'applique également au PCC, une fois la réaction de carbonatation terminée : on obtient une suspension aqueuse de PCC ayant une viscosité tout à fait acceptable (du point de vue de sa maniabilité et de son transport), sans devoir ajouter de l'eau pour faire diminuer la viscosité.

Dans le cadre de l'invention, la Demanderesse pense que le phénomène de dispersion est vraisemblablement gouverné par un mécanisme de répulsion stérique, de part le caractère faiblement ionique du copolymère utilisé : il ne s'agit pas d'un mécanisme ionique où le dispersant est absorbé à la surface des particules minérales, comme dans le cas d'un polyacrylate standard. De ce fait, ledit copolymère, à la différence d'un polyacrylate, n'agit pas comme inhibiteur de cristallisation : ceci expliquerait pourquoi la structure cristallographique du PCC formé est conservée, c'est-à-dire qu'elle demeure identique à celle obtenue par le même procédé mais sans le copolymère de l'invention.

Aussi, un premier objet de l'invention consiste en l'utilisation, dans un procédé de fabrication de carbonate de calcium précipité, d'au moins un copolymère caractérisé en ce qu'il est constitué, exprimé en pourcentage en mole de chacun de ses monomères :
a) de 10 % à 99 %, préférentiellement de 50 % à 98 %, très préférentiellement de 80 % à 97 %, et de manière extrêmement préférentielle de 85 % à 95 % d'au moins un monomère vinylique autre que le monomère de formule (I),
b) de 1 % à 90 %, préférentiellement de 2 % à 50 %, très préférentiellement de 3 % à 20
   %, et de manière extrêmement préférentielle de 5 % à 15 % d'au moins un monomère non ionique, de formule (I) : 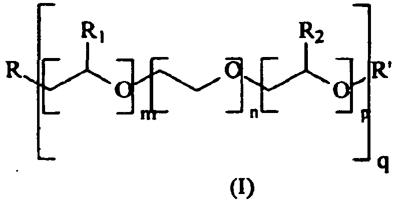 dans laquelle :
   - m, n, p et q sont des entiers et m, n, p sont inférieurs à 150 et l'un d'eux au moins est supérieur à 0, préférentiellement 20,
   - R comporte une fonction insaturée polymérisable,
   - R₁ et R₂ sont identiques ou différents et représentent des atomes d'hydrogène ou des groupements alkyls ayant de 1 à 4 atomes de carbone,
   - R' représente l'hydrogène ou un radical hydrocarboné ayant 1 à 40 atomes de carbone, préférentiellement 1 à 4 atomes de carbone, R' étant très préférentiellement le radical méthyle,
ou du mélange de plusieurs monomères de formule (I),

la somme des pourcentages en mole des monomères a) et b) étant égale à 100 %.

Cette utilisation est aussi caractérisée en ce que le monomère vinylique autre que le monomère de formule (I) est choisi parmi l'acide acrylique, méthacrylique, l'acrylamide, la méthacrylamide ou un monomère cationique, ou leurs mélanges.

Cette utilisation est aussi caractérisée en ce que le monomère cationique est choisi parmi les sels d'esters (méth)acryliques d'ammonium quaternaire et préférentiellement le chlorure ou le sulfate de [2-(méthacryloyloxy) éthyl] triméthyl ammonium, le chlorure ou le sulfate de [2-(acryloyloxy) éthyl] triméthyl ammonium, le chlorure ou le sulfate de [3-(acrylamido) propyl] triméthyl ammonium, le chlorure ou le sulfate de diméthyl diallyl ammonium, le chlorure ou le sulfate de [3-(méthacrylamido) propyl] triméthyl ammonium, ou leurs mélanges.

Cette utilisation est aussi caractérisée en ce que la fonction polymérisable est choisie parmi les fonctions vinyliques, ou les fonctions esters acrylique, méthacrylique, maléique, ou les fonctions insaturées uréthannes et est préférentiellement une fonction acryluréthanne, méthacryluréthanne, α-α' diméthyl-isopropényl-benzyluréthanne, allyluréthanne, ou les fonctions éthers allyliques ou vinyliques substitués ou non, ou au les fonctions amides ou imides éthyléniquement insaturées, et est préférentiellement la fonction ester méthacrylique.

Cette utilisation est aussi caractérisée en ce que ledit copolymère est obtenu sous forme acide et éventuellement distillé, et est partiellement ou totalement neutralisé par un ou plusieurs agents de neutralisation disposant d'un cation monovalent ou polyvalent, lesdits agents étant choisis préférentiellement parmi l'ammoniaque ou parmi les hydroxydes et/ou oxydes de calcium, de sodium, de magnésium, de potassium, de lithium, ou parmi les amines primaires, secondaires ou tertiaires aliphatiques et/ou cycliques et préférentiellement parmi la stéarylamine, les éthanolamines (mono-, di-, triéthanolamine), la mono et diéthylamine, la cyclohexylamine, la méthylcyclohexylamine, l'amino méthyl propanol, la morpholine, et de manière préférentielle en ce que l'agent de neutralisation est l'hydroxyde de sodium.

Cette utilisation est aussi caractérisée en ce que ledit copolymère est obtenu par des procédés de polymérisation radicalaire en solution, en émulsion directe ou inverse, en suspension ou précipitation dans des solvants, en présence de systèmes catalytiques et d'agents de transfert, ou encore par des procédés de polymérisation radicalaire contrôlée et préférentiellement par la polymérisation contrôlée par des nitroxydes (NMP) ou par des cobaloxymes, par la polymérisation par transfert d'atome radicalaire (ATRP), par la polymérisation radicalaire contrôlée par des dérivés soufrés, choisis parmi des carbamates, des dithioesters ou des trithiocarbonates (RAFT) ou des xanthates.

Cette utilisation est aussi caractérisée en ce que ledit copolymère peut être, avant ou après la réaction de neutralisation totale ou partielle, traité et séparé en plusieurs phases, selon des procédés statiques ou dynamiques, par un ou plusieurs solvants polaires appartenant préférentiellement au groupe constitué par l'eau, le méthanol, l'éthanol, le propanol, l'isopropanol, les butanols, l'acétone, le tétrahydrofurane ou leurs mélanges.

Cette utilisation dudit copolymère dans un procédé de fabrication de carbonate de calcium précipité, est aussi caractérisée en ce que ledit procédé comporte au moins une étape de fourniture de chaux vive, au moins une étape d'extinction de ladite chaux vive, et au moins une étape de carbonatation de ladite chaux vive.

Cette utilisation dudit copolymère dans un procédé de fabrication de carbonate de calcium précipité, est aussi caractérisée en ce que ledit procédé consiste à :
a) prendre une poudre de chaux vive ;
b) soit éteindre la chaux vive issue de l'étape a) en 2 temps par :
   - extinction partielle de ladite chaux vive en mélangeant celle-ci avec une solution aqueuse b1) en vue d'obtenir une chaux partiellement hydratée,
   - suivie de l'extinction totale par ajout à ladite chaux hydratée d'une solution aqueuse b2) en vue d'obtenir une suspension de chaux éteinte ;
b') soit éteindre la chaux vive issue de l'étape a) en 1 temps par :
   - mélange avec solution aqueuse b3) en vue d'obtenir une suspension de chaux éteinte ;
c) éventuellement broyer la suspension de chaux éteinte issue de l'étape b) ou b'),
d) réaliser la carbonatation de la suspension de la chaux éteinte issue de l'étape b) ou b') ou c) par introduction de CO2 dans ladite suspension de chaux éteinte ;
ledit polymère étant introduit :
- pendant l'étape b) dans la solution aqueuse b1) et/ou b2),
- ou pendant l'étape b') dans la solution aqueuse b3),
- et/ou pendant l'étape c) dans le milieu réactionnel.

Cette utilisation dudit copolymère dans un procédé de fabrication de carbonate de calcium précipité, est aussi caractérisée en ce que ledit copolymère est mis en oeuvre à raison de 0,01 à 1 % en poids sec, par rapport au poids sec de chaux éteinte.

Cette utilisation dudit copolymère dans un procédé de fabrication de carbonate de calcium précipité, est enfin caractérisée en ce que ledit copolymère est mis en oeuvre comme agent permettant de réduire le temps de carbonatation du carbonate de calcium précipité.

### EXEMPLES

### Exemple 1

Dans les essais suivants, on fabrique un carbonate de calcium précipité (PCC) par bullage de CO₂ dans une suspension aqueuse de (Ca(OH)₂).

Les polymères mis en oeuvre sont, pour l'art antérieur, un polyacrylate de sodium de poids moléculaire en masse égale à 10 500 g/mol (référencé PAA dans la suite de la Demande) et un polyéthylène glycol de poids moléculaire en masse égal à 600 g/mol (référencé PEG dans la suite de la Demande).

Le polymère mis en oeuvre dans le cadre de l'invention (référencé P dans la suite de la Demande) est un copolymère constitué de, en mole :
a) 79,8 % d'acide méthacrylique et 9,0 % d'acrylate d'éthyle,
b) 11,2 % d'un monomère de formule (I), dans laquelle :
   - R désigne la fonction méthacrylate,
   - R' désigne le groupe méthyle,
   - m=p=0 ; n=45 ; q=1.

L'efficacité ou le rendement du procédé de fabrication du PCC est déterminé comme étant égal à la masse de PCC produit (en kg) ramenée à la masse de la suspension de PCC obtenu (en kg) et au temps de carbonatation (en min).

Les polymorphes du PCC formé ont été caractérisés visuellement à partir des images desdits polymorphes réalisées à partir de Microscopie Electronique à Balayage.

Le diamètre médian d₅₀ (µm), où dₓ représente la valeur du diamètre pour laquelle x % en poids de particules présentent un diamètre inférieur à dₓ, du PCC obtenu a été déterminé à partir d'un appareil Sedigraph™ 5100 commercialisé par la société MICROMERITICS™.

La surface spécifique, notée SSA (m²/g), des particules de PCC obtenues a été déterminée selon la méthode BET, en accord avec la norme ISO 9277:1995.

La viscosité Brookfield™ de la suspension finale de PCC obtenue a été mesurée à 25 °C, et à 100 tours / minute, et est notée µ100 (mPa.s).

La quantité résiduelle de chaux obtenue dans le PCC final a été déterminée par Diffraction des Rayons X.

### Essai n° 1 : essai de référence, sans polymère, pour la synthèse d'un PCC de calcite de forme scalenoèdre.

200 kg d'oxyde de calcium (origine : Autriche) sont introduits dans un réacteur sous agitation, contenant 1 700 litres d'eau du robinet à 40 °C ; le milieu est agité pendant 30 minutes. La suspension résultante est ensuite diluée avec de l'eau, en vue d'obtenir un extrait sec donné (ou pourcentage en poids sec de matière minérale par rapport au poids total de ladite suspension, noté ES).

1 750 litres de cette suspension sont ensuite portés à une température de 50 °C et introduits dans un réacteur cylindrique en acier inoxydable de 1 850 litres, muni d'un agitateur et équipé de sondes de contrôle du pH et de la conductivité du milieu.

A partir du fond du réacteur, on fait buller un mélange gazeux d'air et de CO₂ (contenant entre 20 et 30 % en volume de CO₂), à un débit de 200 m³/h, la suspension étant agitée à une vitesse comprise entre 200 et 300 tours / minute. La surpression au niveau du gaz d'alimentation est comprise entre 150 et 200 mbar, ce qui correspond à la pression hydrostatique de Ca(OH)₂ au sein du réacteur.

Au cours de la carbonatation, la température de la suspension n'est pas régulée et peut augmenter, de part la chaleur générée pendant cette réaction exothermique. Une fois que la conductivité atteint sa valeur minimale, on maintient le bullage pendant encore 4 minutes.

### Essai n° 2 : essai illustrant l'art antérieur, à travers la synthèse d'un PCC de calcite de forme scalenoèdre, en présence du polymère PAA

Cet essai a été conduit selon le protocole décrit dans l'essai n° 1, avec introduction de 0,1 % en poids sec du polymère PAA (par rapport au poids sec de Ca(OH)₂) dans la suspension de Ca(OH)₂, avant l'étape de carbonatation.

### Essai n° 3 : essai illustrant l'invention, à travers la synthèse d'un PCC de calcite de forme scalenoèdre, en présence du polymère P

Cet essai a été conduit selon le protocole décrit dans l'essai n° 1, avec introduction de 0,075 % en poids sec du polymère P (par rapport au poids sec de Ca(OH)₂) dans la suspension de Ca(OH)₂, avant l'étape de carbonatation.

Dans chacun des essais n° 1 à 3, le produit final présente une teneur massique en chaux résiduelle inférieure à 6 % du poids total du PCC obtenu.

Pour ces essais, le temps de carbonatation, représentant le temps écoulé entre le moment d'introduction du gaz et le moment où la conductivité passe par son seuil minimal, de même que les autres paramètres et grandeurs mesurés, sont indiqués dans le tableau 1.

### Essai n° 4 : essai de référence, sans polymère, pour la synthèse d'un PCC aragonitique.

160 kg d'oxyde de calcium (origine : Etats-Unis) sont introduits dans un réacteur sous agitation, contenant 1 300 litres d'eau du robinet à 50 °C ; le milieu est agité pendant 30 minutes. La suspension résultante est ensuite diluée avec de l'eau, en vue d'obtenir un extrait sec donné (ou % en poids sec de matière minérale par rapport au poids total de ladite suspension, noté ES).

1 250 litres de cette suspension sont ensuite portés à une température de 60 °C et introduits dans un réacteur cylindrique en acier inoxydable de 1 850 litres, muni d'un agitateur et équipé de sondes de contrôle du pH et de la conductivité du milieu.

Avant l'étape de carbonatation, on introduit dans le réacteur des germes de PCC du type aragonitique.

A partir du fond du réacteur, on commence par faire buller un mélange gazeux d'air et de CO₂ (contenant entre 4 et 8 % en volume de CO₂), à un débit de 100 m³/h, la suspension étant agitée à une vitesse comprise entre 200 et 300 tours / minute. Peu à peu, la fraction de CO₂ dans le mélange est augmentée jusqu'à une valeur comprise entre 20 et 30 % du volume dudit mélange. La suppression au niveau du gaz d'alimentation est alors comprise entre 100 et 200 mbar, ce qui correspond à la pression hydrostatique de Ca(OH)₂ au sein du réacteur.

Lorsque la teneur en CO₂ dans le gaz d'échappement dépasse 6 % en volume, on ajoute de l'eau chaude pour diluer la suspension et ce, de manière à obtenir une certaine viscosité (tel qu'indiqué dans le tableau 1).

Au cours de la carbonatation, la température de la suspension n'est pas régulée et peut augmenter, de part la chaleur générée pendant cette réaction exothermique. Une fois que la conductivité atteint sa valeur minimale, on maintient le bullage pendant encore 4 minutes.

### Essai n° 5 : essai illustrant l'invention, à travers la synthèse d'un PCC aragonite en présence du polymère P

Cet essai a été conduit dans les mêmes conditions que l'essai n° 4, mais par mise en oeuvre de 0,075 % en poids sec (par rapport au poids sec de Ca(OH)₂) du polymère P, qui a été ajouté dans l'eau d'extinction, préalablement à l'introduction de CaO dans le réacteur.

### Essai n° 6 : essai illustrant l'invention, à travers la synthèse d'un PCC aragonite en présence du polymère P

Cet essai a été conduit dans les mêmes conditions que l'essai n° 4, mais par mise en oeuvre de 0,075 % en poids sec (par rapport au poids sec de Ca(OH)₂) du polymère P, qui a été ajouté dans la suspension, avant l'étape de carbonatation.

### Essai n° 7 : essai illustrant l'invention, à travers la synthèse d'un PCC aragonite en présence du polymère P

Cet essai a été conduit dans les mêmes conditions que l'essai n° 4, mais par mise en oeuvre de 0,15 % en poids sec (par rapport au poids sec de Ca(OH)₂) du polymère P, qui a été ajouté dans la suspension, avant l'étape de carbonatation.

### Essai n° 8 : essai illustrant l'invention, à travers la synthèse d'un PCC aragonite en présence du polymère P

Cet essai a été conduit dans les mêmes conditions que l'essai n° 4, mais par mise en oeuvre de 0,20 % en poids sec (par rapport au poids sec de Ca(OH)₂) du polymère P, qui a été ajouté dans la suspension, avant l'étape de carbonatation.

Dans chacun des essais n° 4 à 8, le produit final présente une teneur massique en chaux résiduelle inférieure à 6 % du poids total du PCC obtenu.

Pour ces essais, le temps de carbonatation, représentant le temps écoulé entre le moment d'introduction du gaz et le moment où la conductivité passe par son seuil minimal, de même que les autres paramètres et grandeurs mesurés, sont indiqués dans le tableau 1.

### Essai n° 9 : essai de référence, sans polymère, pour la synthèse d'un PCC aragonite.

160 kg d'oxyde de calcium (origine : Autriche) sont introduits dans un réacteur sous agitation, contenant 1 300 litres d'eau du robinet à 50 °C ; le milieu est agité pendant 30 minutes. La suspension résultante est ensuite diluée avec de l'eau, en vue d'obtenir un extrait sec donné (ou pourcentage en poids sec de matière minérale par rapport au poids total de ladite suspension, noté ES).

1 250 litres de cette suspension sont ensuite portés à une température de 60 °C et introduits dans un réacteur cylindrique en acier inoxydable de 1 850 litres, muni d'un agitateur et équipé de sondes de contrôle du pH et de la conductivité de la suspension.

Avant l'étape de carbonatation, on introduit dans le réacteur des germes de PCC du type aragonite.

A partir du fond du réacteur, on commence par faire buller un mélange gazeux d'air et de CO₂ (contenant entre 4 et 8 % en volume de CO₂), à un débit de 100 m³/h, la suspension étant agitée à une vitesse comprise entre 200 et 300 tours / minute. Peu à peu, la fraction de CO₂ dans le mélange est augmentée jusqu'à une valeur comprise entre 20 et 30 % du volume dudit mélange. La suppression au niveau du gaz d'alimentation est alors comprise entre 100 et 200 mbar, ce qui correspond à la pression hydrostatique de Ca(OH)₂ au sein du réacteur.

Lorsque la teneur en CO₂ dans le gaz d'échappement dépasse 6 % en volume, on ajoute de l'eau chaude pour diluer la suspension et ce, de manière à obtenir une certaine viscosité (tel qu'indiqué dans le tableau 1).

Au cours de la carbonatation, la température de la suspension n'est pas régulée et peut augmenter, de part la chaleur générée pendant cette réaction exothermique. Une fois que la conductivité atteint sa valeur minimale, on maintient le bullage pendant encore 4 minutes.

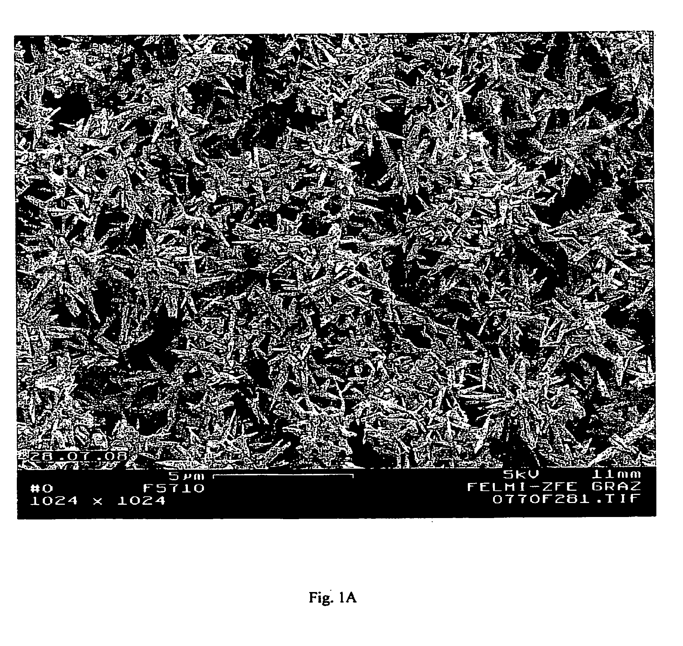

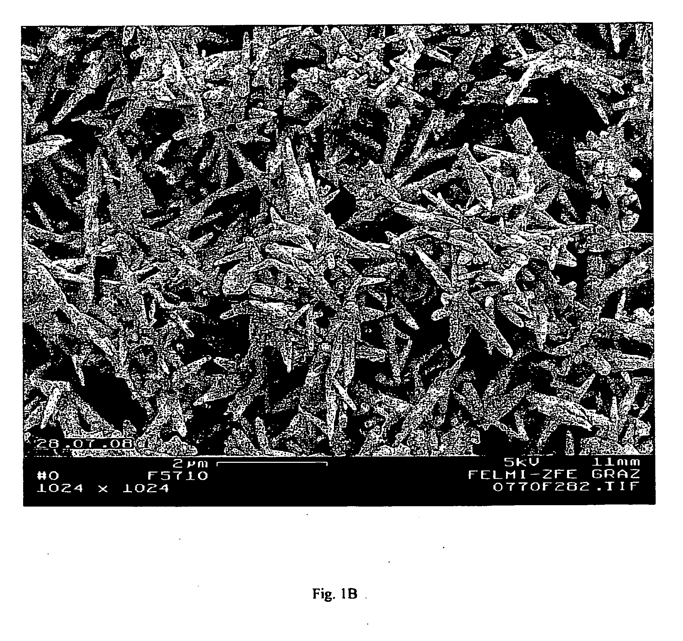

Les figures 1A et 1B (agrandissement de la figure 1A) représentent l'image obtenue au Microscope Electronique à Balayage des polymorphes obtenus, qui présentent une forme en aiguille, caractéristique d'un PCC de type aragonit.

### Essai n° 10 : essai illustrant l'invention, à travers la synthèse d'un PCC aragonite en présence du polymère P

Cet essai a été conduit dans les mêmes conditions que l'essai n° 9, mais par mise en oeuvre de 0,10 % en poids sec (par rapport au poids sec de Ca(OH)₂) du polymère P, qui a été ajouté dans la suspension, avant l'étape de carbonatation.

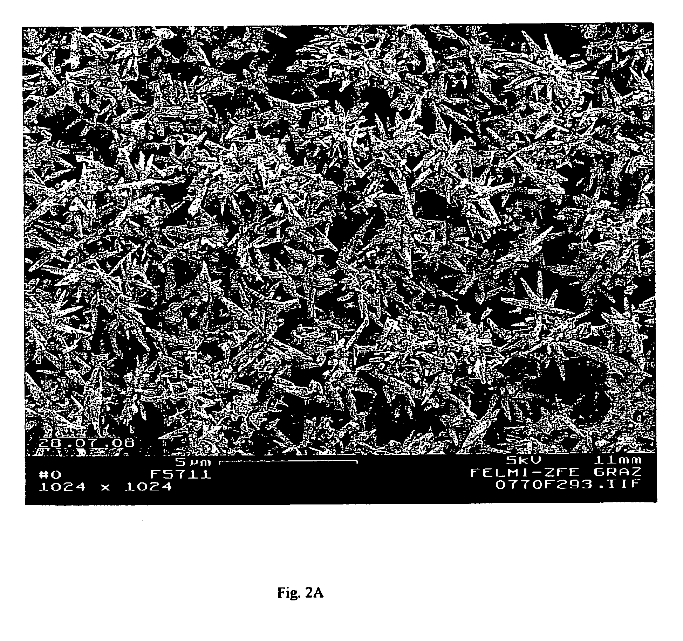

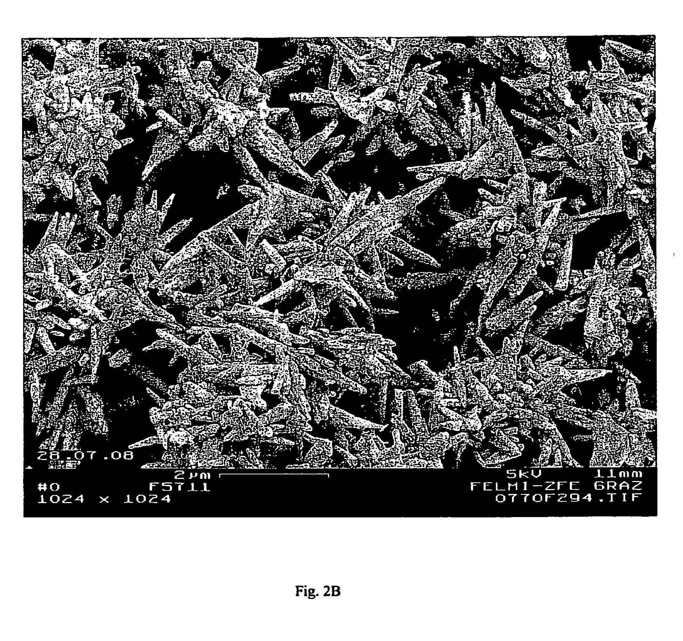

Les figures 2A et 2B (agrandissement de la figure 2A) représentent l'image obtenue au Microscope Electronique à Balayage des polymorphes obtenus, qui présentent une forme en aiguille, caractéristique d'un PCC de type aragonite.

### Essai n° 11 : essai illustrant l'art antérieur, à travers la synthèse d'un PCC aragonite en présence du polymère PEG

Cet essai a été conduit dans les mêmes conditions que l'essai n° 9, mais par mise en oeuvre de 0,10 % en poids sec (par rapport au poids sec de Ca(OH)₂) du polymère PEG, qui a été ajouté dans la suspension, avant l'étape de carbonatation.

Dans chacun des essais n° 9 à 11, le produit final présente une teneur massique en chaux résiduelle inférieure à 6 % du poids total du PCC obtenu.

Pour ces essais, le temps de carbonatation, représentant le temps écoulé entre le moment d'introduction du gaz et le moment où la conductivité passe par son seuil minimal, de même que les autres paramètres et grandeurs mesurés, sont indiqués dans le tableau 1.

**TABLEAU 1**

| Essai n° | Polymère | % en poids du polymère | % en poids sec de Ca(OH)₂ | Volume (L) de la suspension de Ca(OH)₂ | Temps (min) de carbonatation | Masse (kg) de Ca(OH)₂ | Masse (kg) théorique de PCC produit |
|---|---|---|---|---|---|---|---|
| | | (/ poids total de Ca(OH)₂) | (/ poids total suspension) | | | | |
| | | | | | | | |
| 1 | - | - | 13.2 | 1750 | 65 | 245 | 331 |
| 2 | PAA | 0.100 | 13.0 | 1750 | 74 | 242 | 327 |
| 3 | P | .075 | 13.2 | 1750 | 54 | 245 | 331 |
| | | | | | | | |
| 4 | - | - | 12.8 | 1250 | 65 | 170 | 230 |
| 5 | P | .075 | 13.3 | 1250 | 59 | 176 | 238 |
| 6 | P | .075 | 12.8 | 1250 | 54 | 170 | 230 |
| 7 | P | 0.150 | 13.2 | 1250 | 62 | 175 | 236 |
| 8 | p | 0.200 | 12.9 | 1250 | 63 | 171 | 231 |
| | | | | | | | |
| 9 | - | - | 13.5 | 1250 | 66 | 179 | 242 |
| 10 | P | .100 | 13.6 | 1250 | 65 | 180 | 243 |
| 11 | PEG | 0.100 | 13.1 | 1250 | 64 | 174 | 235 |

| Essai n° | Volume (L)d'eau de dilution ajoutée | µ100 (mPa.s) | Masse (kg) de la suspension de PCC | Masse de PCC (kg) / (temps de carbonatation (min) * masse suspension PCC (kg)) | Polymorphe de PCC | d50 (µm) | SSA BET (m²/g) |
|---|---|---|---|---|---|---|---|
| | | | | | | | |
| 1 | - | 23 | 1994 | 0.15 | S-PCC | 2.36 | 4.1 |
| 2 | - | 18 | 2070 | 0.13 | S-PCC | 2.32 | 4.5 |
| 3 | - | 15 | 2122 | 0.17 | S-PCC | 2.25 | 5.8 |
| | | | | | | | |
| 4 | 350 | 340 | 1853 | 0.11 | A-PCC | 1.48 | 10.3 |
| 5 | 350 | 260 | 1711 | 0.14 | A-PCC | 1.80 | 8.5 |
| 6 | 100 | 200 | 1584 | 0.16 | A-PCC | 1.80 | 9.4 |
| 7 | - | 299 | 1425 | 0.16 | A-PCC | 1.91 | 8.9 |
| 8 | - | 255 | 1384 | 0.16 | A-PCC | 1.98 | 8.6 |
| | | | | | | | |
| 9 | 450 | 220 | 1920 | 0.11 | A-PCC | 1.51 | 9.3 |
| 10 | 50 | 215 | 1492 | 0.15 | A-PCC | 1.95 | 8.4 |
| 11 | 150 | 228 | 1656 | 0.13 | A-PCC | 1.98 | 9.1 |

Dans le tableau 1, S-PCC indique la présence de PCC de calcite de forme scalenoèdre, alors que A-PCC fait référence à une structure aragonite.

Les résultats de ce tableau démontrent clairement que seul le polymère de l'invention permet de réduire de manière très marquée le temps de carbonatation, permettant ainsi d'augmenter le rendement du procédé et ce, tout en conservant la structure du PCC fabriqué de même que ses caractéristiques granulométriques.

## Revendications

1. - Utilisation, dans un procédé de fabrication de carbonate de calcium précipité, d'au moins un copolymère **caractérisé en ce qu'**il est constitué, exprimé en pourcentage en mole de chacun de ses monomères :
a) de 10 % à 99 %, préférentiellement de 50 % à 98 %, très préférentiellement de 80 % à 97 %, et de manière extrêmement préférentielle de 85 % à 95 % d'au moins un monomère vinylique autre que le monomère de formule (I),
b) de 1 % à 90 %, préférentiellement de 2 % à 50 %, très préférentiellement de 3 % à 20 %, et de manière extrêmement préférentielle de 5 % à 15 % d'au moins un monomère non ionique, de formule (I) : 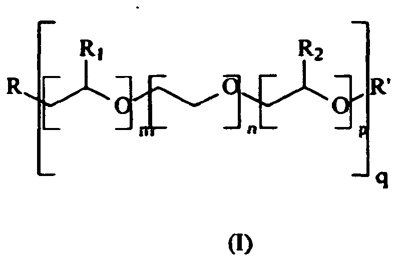 dans laquelle :
- m, n, p et q sont des entiers et m, n, p sont inférieurs à 150 et l'un d'eux au moins est supérieur à 0, préférentiellement 20,
- R comporte une fonction insaturée polymérisable,
- R₁ et R₂ sont identiques ou différents et représentent des atomes d'hydrogène ou des groupements alkyls ayant de 1 à 4 atomes de carbone,
- R' représente l'hydrogène ou un radical hydrocarboné ayant 1 à 40 atomes de carbone, préférentiellement 1 à 4 atomes de carbone, R' étant très préférentiellement le radical méthyle,
ou du mélange de plusieurs monomères de formule (I),
la somme des pourcentages en mole des monomères a) et b) étant égale à 100 %.

2. - Utilisation selon la revendication 1, **caractérisée en ce que** le monomère vinylique autre que le monomère de formule (**I**) est choisi parmi l'acide acrylique, méthacrylique, l'acrylamide, la méthacrylamide ou un monomère cationique, ou leurs mélanges.

3. - Utilisation selon la revendication 2, **caractérisée en ce que** le monomère cationique est choisi parmi les sels d'esters (méth)acryliques d'ammonium quaternaire, et préférentiellement le chlorure ou le sulfate de [2-(méthacryloyloxy) éthyl] triméthyl ammonium, chlorure ou le sulfate de [2-(acryloyloxy) éthyl] triméthyl ammonium, le chlorure ou le sulfate de [3-(acrylamido) propyl] triméthyl ammonium, le chlorure ou le sulfate de diméthyl diallyl ammonium, le chlorure ou le sulfate de [3-(méthacrylamido) propyl] triméthyl ammonium, ou leurs mélanges.

4. - utilisation selon l'une des revendications 1 à 3, **caractérisée en ce que** la fonction polymérisable est choisie parmi les fonctions vinyliques, ou les fonctions esters acrylique, méthacrylique, maléique, ou les fonctions insaturées uréthannes et est préférentiellement une fonction acryluréthanne, méthacryluréthanne, α-α' diméthyl-isopropényl-benzyluréthanne, allyluréthanne, ou les fonctions éthers allyliques ou vinyliques substitués ou non, ou au les fonctions amides ou imides éthyléniquement insaturées, et est préférentiellement la fonction ester méthacrylique.

5. - Utilisation selon l'une des revendications 1 à 4, **caractérisée en ce que** ledit copolymère est obtenu sous forme acide et éventuellement distillé, et est partiellement ou totalement neutralisé par un ou plusieurs agents de neutralisation disposant d'un cation monovalent ou polyvalent, lesdits agents étant choisis préférentiellement parmi l'ammoniaque ou parmi les hydroxydes et/ou oxydes de calcium, de sodium, de magnésium, de potassium, de lithium, ou parmi les amines primaires, secondaires ou tertiaires aliphatiques et/ou cycliques et préférentiellement parmi la stéarylamine, les éthanolamines (mono-, di-, triéthanolamine), la mono et diéthylamine, la cyclohexylamine, la méthylcyclohexylamine, l'amino méthyl propanol, la morpholine, et de manière préférentielle **en ce que** l'agent de neutralisation est l'hydroxyde de sodium.

6. - Utilisation selon l'une des revendications 1 à 5, **caractérisée en ce que** ledit copolymère est obtenu par des procédés de polymérisation radicalaire en solution, en émulsion directe ou inverse, en suspension ou précipitation dans des solvants, en présence de systèmes catalytiques et d'agents de transfert, ou encore par des procédés de polymérisation radicalaire contrôlée et préférentiellement par la polymérisation contrôlée par des nitroxydes (NMP) ou par des cobaloxymes, par la polymérisation par transfert d'atome radicalaire (ATRP), par la polymérisation radicalaire contrôlée par des dérivés soufrés, choisis parmi des carbamates, des dithioesters ou des trithiocarbonates (RAFT) ou des xanthates.

7. - Utilisation selon l'une des revendications 1 à 6, **caractérisée en ce que** ledit copolymère peut être, avant ou après la réaction de neutralisation totale ou partielle, traité et séparé en plusieurs phases, selon des procédés statiques ou dynamiques, par un ou plusieurs solvants polaires appartenant préférentiellement au groupe constitué par l'eau, le méthanol, l'éthanol, le propanol, l'isopropanol, les butanols, l'acétone, le tétrahydrofurane ou leurs mélanges.

8. - Utilisation selon l'une des revendications 2 à 7, dans un procédé de fabrication de carbonate de calcium précipité, **caractérisée en ce que** ledit procédé comporte au moins une étape de fourniture de chaux vive, au moins une étape d'extinction de ladite chaux vive, et au moins une étape de carbonatation de ladite chaux vive.

9. - Utilisation selon l'une des revendications 2 à 8, dans un procédé de fabrication de carbonate de calcium précipité, **caractérisée en ce que** ledit procédé consiste à :
a) prendre une poudre de chaux vive ;
b) soit éteindre la chaux vive issue de l'étape a) en 2 temps par :
- extinction partielle de ladite chaux vive en mélangeant celle-ci avec une solution aqueuse b1) en vue d'obtenir une chaux partiellement hydratée,
- suivie de l'extinction totale par ajout à ladite chaux hydratée d'une solution aqueuse b2) en vue d'obtenir une suspension de chaux éteinte ;
b') soit éteindre la chaux vive issue de l'étape a) en 1 temps par :
- mélange avec solution aqueuse b3) en vue d'obtenir une suspension de chaux éteinte ;
c) éventuellement broyer la suspension de chaux éteinte issue de l'étape b) ou b'),
d) réaliser la carbonatation de la suspension de la chaux éteinte issue de l'étape b) ou
b') ou c) par introduction de CO₂ dans ladite suspension de chaux éteinte ;
ledit polymère étant introduit :
- pendant l'étape b) dans la solution aqueuse b1) et/ou b2),
- ou pendant l'étape b') dans la solution aqueuse b3),
- et/ou pendant l'étape c) dans le milieu réactionnel.

10. - Utilisation selon l'une des revendications 2 à 9, dans un procédé de fabrication de carbonate de calcium précipité, **caractérisée en ce que** ledit copolymère est mis en oeuvre à raison de 0,01 à 1 % en poids sec, par rapport au poids sec de chaux éteinte.

11. - Utilisation selon l'une des revendications 2 à 10, dans un procédé de fabrication
de carbonate de calcium précipité, **caractérisée en ce que** ledit copolymère est mis en oeuvre comme agent permettant de réduire le temps de carbonatation du carbonate de calcium précipité.

## Claims

1. - Use in a precipitated calcium carbonate manufacturing process of at least one copolymer **characterized in that** it is constituted, expressed as a molar percentage of each of its monomers:
a) of 10% to 99%, preferentially of 50% to 98%, very preferentially of 80% to 97%, and extremely preferentially of 85% to 95% of at least one vinyl monomer other than the monomer of formula (I),
b) of 1% to 90%, preferentially of 2% to 50%, very preferentially of 3% to 20%, and extremely preferentially of 5% to 15% of at least one non-ionic monomer of formula (I), 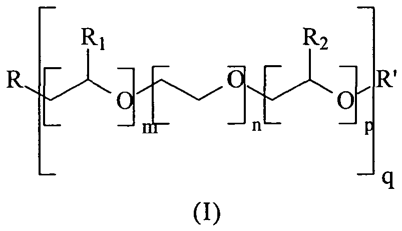 in which:
- m, n, p and q are integers and m, n, p are less than 150, and at least one of them is greater than 0, preferentially 20,
- R comprises a polymerizable unsaturated group,
- R₁ and R₂ are identical or different and represent hydrogen atoms or alkyl groups having from 1 to 4 carbon atoms,
- R' represents hydrogen or a hydrocarbon radical having 1 to 40 carbon atoms, preferentially 1 to 4 carbon atoms, R' being very preferentially the methyl radical,
or of the mixture of several monomers of formula (I),
the sum of the percentages in moles of the monomers a) and b) being equal to 100%.

2. - Use according to claim 1 **characterized in that** the vinyl monomer other than the monomer of formula (I) is chosen from among acrylic acid, methacrylic acid, acrylamide, methacrylamide or a cationic monomer or their mixtures.

3. - Use according to claim 2, **characterized in that** the cationic monomer is chosen from among the quaternary ammonium (meth)acrylic ester salts, and preferentially from [2-(methacryloyloxy) ethyl] trimethyl ammonium chloride or sulphate, from [2-(acryloyloxy) ethyl] trimethyl ammonium chloride or sulphate, from [3-(acrylamido) propyl] trimethyl ammonium chloride or sulphate, from dimethyl diallyl ammonium chloride or sulphate, from [3-(methacrylamido) propyl] trimethyl ammonium chloride or sulphate, or their mixtures.

4. . Use according to one of claims 1 to 3 **characterized in that** the polymerizable group is chosen from among the vinyl groups or the acrylic, methacrylic, maleic ester groups, or the unsaturated urethane groups and is preferentially an acrylurethane, methacrylurethane, α-α' dimethyl-isopropenyl-benzylurethane, allylurethane group, or the allylic ether groups, either vinyl substituted or not, or the ethylenically unsaturated amide or imide groups, and is preferentially the methacrylic ester group.

5. - Use according to one of claims 1 to 4 **characterised in that** the said copolymer is obtained in the acid or possibly distilled form, and is partially or totally neutralized by one or more neutralizing agents with a monovalent or polyvalent cation, the said agents preferentially being selected from ammonium hydroxide or from among the hydroxides and/or oxides of calcium, sodium, magnesium, potassium, lithium, or from among the primary, secondary or tertiary aliphatic and/or cyclic amines and preferentially from among stearylamine, the ethanolamines (mono-, di-, triethanolamine), mono and diethylamine, cyclohexyl-amine, methylcyclohexylamine, amino methyl propanol, morpholine, and preferentially **in that** the neutralizing agent is sodium hydroxide.

6. - Use according to one of claims 1 to 5 **characterised in that** the said copolymer is obtained by processes of radical polymerization in solution, in direct or inverse emulsion, in suspension or precipitation in solvents, in the presence of catalytic systems and transfer agents, or again by controlled radical polymerization processes and preferentially by polymerization controlled by a nitroxides (NMP) or by cobaloxymes, by atom transfer radical polymerization (ATRP), by controlled radical polymerization by sulphur derivatives, selected from among the carbamates, dithioesters or trithiocarbonates (RAFT) or the xanthates.

7. - Use according to one of claims 1 to 6 **characterized in that** said copolymer can be, before or after the total or partial neutralization reaction, treated and separated into several phases according to static or dynamic processes, by one or more polar solvents preferentially belonging to the group consisting of water, methanol, ethanol, propanol, isopropanol, the butanols, acetone, tetrahydrofuran or their mixtures.

8. - Use according to one of claims 2 to 7 in a precipitated calcium carbonate manufacturing process, **characterized in that** said process has at least one step for the supply of quicklime, at least one step for the slaking of the said quicklime, and at least one step for carbonation of the said quicklime.

9. - Use according to one of claims 2 to 8, in a precipitated calcium carbonate manufacturing process, **characterized in that** said process consist of:
a) taking a quicklime powder;
b) either slaking the quicklime resulting from step a) in 2 parts by:
- partial slaking of the said quicklime by mixing it with an aqueous solution b1) in order to obtain a partially hydrated lime,
- followed by total slaking by the addition to the said hydrated lime of an aqueous solution b2) to obtain a suspension of slaked lime;
b') or slaking of the quicklime resulting from step a) in 1 part by:
- mixed with aqueous solution b3) in order to obtain a suspension of slaked lime;
c) possibly grinding the hydrated lime suspension from step b) or b'),
d) achieving carbonation of the hydrated lime suspension from step b) or b') or c) by introduction of CO₂ to the said slaked lime suspension;
the said polymer being introduced:
- during step b) into the aqueous solution b1) and/or b2),
- or during step b') into the aqueous solution b3),
- and/or during step c) into the reaction medium.

10. - Use according to one of claims 2 to 9 in a precipitated calcium carbonate manufacturing process **characterized in that** said copolymer is used at a rate between 0.01 to 1% by dry weight with respect to the dry weight of the slaked lime.

11. - Use according to one of claims 2 to 10 in a precipitated calcium carbonate manufacturing process, **characterized in that** said copolymer is used as an agent for reducing the carbonation time of the precipitated calcium carbonate.

## Patentansprüche

1. - Verwendung, in einem Verfahren zur Herstellung von gefälltem Calciumcarbonat, mindestens eines Copolymers, welches **dadurch gekennzeichnet ist, dass** die Monomere, aus denen es besteht, jeweils die folgenden Anteile, ausgedrückt in Molprozent, ausmachen:
a) 10 % bis 99 %, vorzugsweise 50 % bis 98 %, sehr bevorzugt 80 % bis 97 %, und mit äußerstem Vorzug 85 % bis 95 %, mindestens eines Vinylmonomers, welches von dem Monomer der Formel (I) verschieden ist,
b) 1 % bis 90 %, vorzugsweise 2 % bis 50 %, sehr bevorzugt 3 % bis 20 %, und mit äußerstem Vorzug 5 % bis 15 %, mindestens eines nichtionischen Monomers der Formel (I): 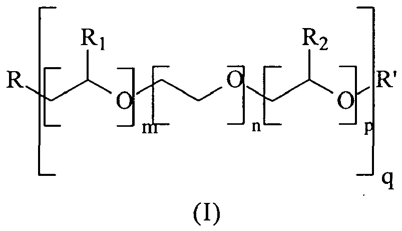 wobei:
- m, n, p und q ganze Zahlen sind und m, n, p kleiner als 150 sind und mindestens eine davon größer als 0, vorzugsweise 20, ist,
- R eine polymerisierbare ungesättigte funktionelle Gruppe aufweist,
- R₁ und R₂ identisch oder verschiedenartig sind und Wasserstoffatome oder Alkylgruppen mit 1 bis 4 Kohlenstoffatomen darstellen,
- R' Wasserstoff oder einen Kohlenwasserstoffrest mit 1 bis 40 Kohlenstoffatomen, vorzugsweise 1 bis 4 Kohlenstoffatomen, darstellt, wobei es sich bei R' sehr bevorzugt um einen Methylrest handelt,
oder einer Mischung mehrerer Monomere der Formel (I),
wobei die Summe der Molprozentanteile der Monomere a) und b) gleich 100 % ist.

2. - Verwendung nach Anspruch 1, **dadurch gekennzeichnet, dass** das Vinylmonomer, welches von dem Monomer der Formel (I) verschieden ist, aus Acryl-, Methacrylsäure, Acrylamid, Methacrylamid oder einem kationischen Monomer oder deren Mischungen ausgewählt ist.

3. - Verwendung nach Anspruch 2, **dadurch gekennzeichnet, dass** das kationische Monomer aus den Salzen von (Meth)acrylsäureestern des quartären Ammoniums, und vorzugsweise aus dem Chlorid oder dem Sulfat von [2-(Methacryloyloxy)ethyl]trimethylammonium, dem Chlorid oder dem Sulfat von [2-(Acryloyloxy)ethyl]-trimethylammonium, dem Chlorid oder dem Sulfat von [3-(Acrylamido)-propyl]trimethylammonium, dem Chlorid oder dem Sulfat von Dimethyldiallylammonium, dem Chlorid oder dem Sulfat von [3-(Methacrylamido)propyl]trimethylammonium, oder aus deren Mischungen ausgewählt ist.

4. - Verwendung nach einem der Ansprüche 1 bis 3, **dadurch gekennzeichnet, dass** die polymerisierbare funktionelle Gruppe aus den funktionellen Vinylgruppen oder den funktionellen Acrylsäure-, Methacrylsäure-, Maleinsäureestergruppen oder den ungesättigten funktionellen Urethangruppen, wobei es sich vorzugsweise um eine funktionelle Acrylurethan- Methacrylurethan-, α-α'-Dimethylisopropylbenzylurethan, Allylurethangruppe handelt, oder aus den funktionellen Allyl- oder Vinylethergruppen, die substituiert oder unsubstituiert sind, oder aus den ethylenisch ungesättigten funktionellen Amid- oder Imidgruppen ausgewählt ist, und wobei es sich vorzugweise um die funktionelle Methacrylsäureestergruppe handelt.

5. - Verwendung nach einem der Ansprüche 1 bis 4, **dadurch gekennzeichnet, dass** das Copolymer in saurer Form erhalten wird und möglicherweise destilliert wird sowie teilweise oder vollständig mit einem oder mehreren Neutralisierungsmitteln neutralisiert wird, welche(s) über ein einwertiges oder mehrwertiges Kation verfügt/verfügen, wobei die Mittel vorzugsweise aus Ammoniumhydroxid oder aus den Hydroxiden und/oder Oxiden von Calcium, Magnesium, Natrium, Kalium, Lithium oder aus den primären, sekundären, tertiären, Aminen aliphatischer und/oder zyklischer Art und vorzugweise aus Stearylamin, den Ethanolaminen (Mono-, Di-, Triethanolamin), Mono- und Diethylamin, Cyclohexylamin, Methylcyclohexylamin, Aminomethylpropanol, Morpholin ausgewählt sind, und vorzugsweise dadurch, dass es sich bei dem Neutralisierungsmittel um Natriumhydroxid handelt.

6. - Verwendung nach einem der Ansprüche 1 bis 5, **dadurch gekennzeichnet, dass** Copolymer durch Verfahren der radikalischen Polymerisation in Lösung, in direkter oder umgekehrter Emulsion, in Suspension oder mit Fällungsvorgang in Lösungsmitteln, in Gegenwart von katalytischen Systemen und Kettenübertragungsmitteln erhalten wird, oder auch durch Verfahren der kontrollierten radikalischen Polymerisation und vorzugsweise durch eine Polymerisation, welche mittels Nitroxiden (NMP) oder mittels Cobaloximen kontrolliert wird, durch eine radikalische Polymerisation unter Atomtransfer (ATRP), durch eine radikalische Polymerisation, welche mittels schwefelhaltiger Verbindungen, die aus den Carbamaten, den Dithioestern oder den Trithiocarbonaten (RAFT) oder den Xanthogenaten ausgewählt sind, kontrolliert wird.

7. - Verwendung nach einem der Ansprüche 1 bis 6, **dadurch gekennzeichnet, dass** das Copolymer, vor oder nach der Reaktion der vollständigen oder teilweisen Neutralisierung, behandelt und in mehrere Phasen aufgetrennt werden kann, und zwar gemäß statischen oder dynamischen Verfahren mittels eines oder mehrerer polarer Lösungsmittel, die vorzugsweise der Gruppe angehören, welche aus Wasser, Methanol, Ethanol, Propanol, Isopropanol, den Butanolen, Aceton, Tetrahydrofuran oder deren Mischungen besteht.

8. - Verwendung nach einem der Ansprüche 2 bis 7, in einem Verfahren zur Herstellung von gefälltem Calciumcarbonat, **dadurch gekennzeichnet, dass** das Verfahren mindestens einen Schritt, in welchem Branntkalk bereitgestellt wird, mindestens einen Schritt des Löschens des Branntkalks und mindestens einen Schritt der Carbonatumwandlung des Branntkalks aufweist.

9. - Verwendung nach einem der Ansprüche 2 bis 8, in einem Verfahren zur Herstellung von gefällten Calciumcarbonat, **dadurch gekennzeichnet, dass** das Verfahren darin besteht:
a) ein Branntkalkpulver zu nehmen;
b) den Branntkalk, der aus Schritt a) stammt, entweder in 2 Stufen zu löschen, durch:
- teilweises Löschen des Branntkalks, indem dieser mit einer wässrigen Lösung b1) vermischt wird, um einen teilweise hydratisierten Kalk zu erhalten,
- anschließendes vollständiges Löschen, indem dem hydratisierten Kalk eine wässrige Lösung b2) zugesetzt wird, um eine Löschkalksuspension zu erhalten;
b') oder den Branntkalk, der aus Schritt a) stammt, in 1 Stufe zu löschen, durch:
- Vermischen mit einer wässrigen Lösung b3), um eine Löschkalksuspension zu erhalten;
c) möglicherweise Zerkleinern der Löschkalksuspension, die aus dem Schritt b) oder b') stammt,
d) Durchführen der Carbonatumwandlung der Löschkalksuspension, die aus dem Schritt b) oder b') stammt, durch Einleiten von CO₂ in die Löschkalksuspension;
wobei das Polymer folgendermaßen zugesetzt wird:
- während des Schritts b) in die wässrige Lösung b1) und/oder b2),
- oder während des Schritts b') in die wässrige Lösung b3),
- und/oder während des Schritts c) in das Reaktionsmilieu.

10. - Verwendung nach einem der Ansprüche 2 bis 9, in einem Verfahren zur Herstellung von gefälltem Calciumcarbonat, **dadurch gekennzeichnet, dass** das Copolymer zu einem Anteil von 0,01 bis 1 % der Trockenmasse eingesetzt wird, bezogen auf die Trockenmasse des Löschkalks.

11. - Verwendung nach einem der Ansprüche 2 bis 10, in einem Verfahren zur Herstellung von gefälltem Calciumcarbonat, **dadurch gekennzeichnet, dass** das Copolymer als Mittel eingesetzt wird, das es ermöglicht, die Zeitdauer der Carbonatumwandlung des gefällten Calciumcarbonats zu verringern.
